# EUROPEAN PATENT SPECIFICATION

(11) **EP 3 332 325 B1**
(45) Date of publication and mention of the grant of the patent: **02.06.2021**
(21) Application number: 15753470.2
(22) Date of filing: 06.08.2015
(51) Int. Cl.: G06F 9/50

(54) **METHODS, APPARATUS, AND SYSTEMS FOR PROVIDING ACCESS TO SERIAL PORTS OF VIRTUAL MACHINES IN SELF-DEPLOYED VIRTUAL APPLICATIONS**
VERFAHREN, VORRICHTUNG UND SYSTEM ZUR BEREITSTELLUNG DES ZUGRIFFS AUF SERIELLE PORTS VIRTUELLER MASCHINEN IN SELBSTINSTALLIERTEN VIRTUELLEN ANWENDUNGEN
PROCÉDÉS, APPAREIL, ET SYSTÈMES POUR ASSURER L'ACCÈS À DES PORTS SÉRIE DE MACHINES VIRTUELLES DANS DES APPLICATIONS VIRTUELLES AUTO-DÉPLOYÉES

(43) Date of publication of application: 13.06.2018
(73) Proprietor: Telefonaktiebolaget LM Ericsson (PUBL), 164 83 Stockholm (SE)
(72) Inventor: LEMAY, Daniel, McMasterville, Québec J3G 6N5 (CA)
(74) Representative: Zacco Sweden AB
(86) International application number: PCT/IB2015/055992
(87) International publication number: WO 2017/021764

(56) References cited:
- US-A1- 2006 168 099
- US-A1- 2010 306 763
- US-A1- 2013 198 744
- HEWLETT-PACKARD COMPANY ET AL: "A method to redirect computing device debug I/O to management controller virtual serial port", RESEARCH DISCLOSURE, MASON PUBLICATIONS, HAMPSHIRE, GB, vol. 527, no. 50, 1 March 2008 (2008-03-01), page 256, XP007138047, ISSN: 0374-4353

## Description

### FIELD

Embodiments of the invention generally relate to the field of cloud computing, and more specifically, to the field of providing remote access to virtual machine serial port interfaces of self-provisioned cloud applications through automated serial port concentration techniques.

### BACKGROUND

Cloud computing is a relatively recent field of computing that enables convenient, on-demand access to a shared pool of configurable computing resources (e.g., networks, server devices, storage devices, software applications and services, etc.) that can be rapidly provisioned and released, typically with minimal management effort or service provider interaction. Thus, cloud computing is often characterized by on-demand self-services, resource pooling, rapid elasticity, and measured services.

One typical cloud computing model that is widely utilized is referred to as Infrastructure as a Service (IaaS), in which a client/customer does not have the ability to manage or control the underlying infrastructure, but instead is provided with the ability to request and utilize processing, storage, network, and/or other fundamental computing resources on demand. For example, a client can cause a particular type of software, which can include operating systems and applications, to be deployed and executed by the provided infrastructure.

Cloud computing is often used in conjunction with virtualized resources. Virtualization of a resource typically refers to an arrangement in which logical resources are abstracted away from physical resources. One common virtualization technology utilized in cloud computing involves virtual machines (or "VMs"), which provide emulation of particular computer systems. VMs offer software implementations of a computing device and thus can operate based on the computer architecture and functions of a real or hypothetical computer.

In many cloud offerings, a user or customer can request the instantiation of a virtual machine or set of machines (or the deployment of a container, etc.) from a management system to perform certain intended tasks or applications. For example, a user may wish to instantiate (or "spin up" a virtual server in a cloud to create an online storefront, provide a web service, process data utilizing a large amount of processing or memory resources, etc.

Some cloud services providers provide largely-preconfigured virtualized applications that can be quickly and easily deployed by cloud users. For example, a cloud provider can offer a virtual application "template" that, when deployed, instantiates one or more multiple VMs that are substantially pre-configured to perform a particular task. For example, a virtual application template could define VMs to implement a multi-tiered application, such as a virtual machine implementing a web server, together with a virtual machine implementing a backend database for the web application, together with a virtual machine implementing a security server, etc.

However, when users deploy virtualized computing resources in the cloud (e.g., a virtual machine, a collection of VMs such as in a virtual application), these resources often require further configuration, management, and/or testing. For example, resources are often deployed with a default configuration that requires certain settings (e.g., passwords, memory limits, etc.) to be modified before the resource can provide the desired service.

Although existing cloud management software can provide some simple configuration and management functionalities, only a small subset of potential configuration / management / testing functionality is exposed to the client, and further, these exposed functionalities are often exposed through web or application user interfaces requiring a human user. Thus, the ability to perform a wide variety of configuration changes or perform compressive testing with potentially a wide variety and number of deployed VMs does not exist. Accordingly, there is a need to address these problems.

Patent application US 2010/0306763 A1 relates to a virtual serial concentrator for virtual machine out-of-band management and discloses a system and method for providing dynamic access through which I/O access such as serial ports, and thus administrators who manage servers, can see, obtain health, state or interact concurrently with multiple virtual machines on a given physical server. In certain embodiments, the system and method includes a dynamic port count virtual serial concentrator coupled with a virtualization device to map emulated serial ports to virtual machines along with a remote plugin that provide dynamic concurrent serial access to many virtual machine serial consoles under a secure and collaborative friendly environment.

### SUMMARY

According to aspects of the present invention, systems, methods, server computing devices and computer-readable storage media according to the independent claims are provided. Preferred embodiments are recited in the dependent claims.

The present disclosure relates generally to cloud computing, and more specifically, to providing remote access to virtual machine serial port interfaces of self-provisioned cloud applications through automated serial port concentration. Certain techniques are disclosed herein that enable manual or automated access to serial ports of VMs of "self-service" deployed cloud applications. Accordingly, examples of the present disclosure can provide immediate, private access to the serial ports of one or more deployed VMs to, for example, create a fully-isolated test bed.

In some examples, a self-service cloud virtual application (or vApp) with one or more VMs is further configured to include a virtual serial port concentrator (VSPC) module (e.g., virtual machine) within the vApp. The VSPC module can be included within a vApp template and thus deployed alongside the one or more VMs. An external configuration agent (e.g., a daemon process) can be deployed to cause the serial ports of the one or more VMs to be connected to the VSPC within the vApp, which can provide external access to the serial ports to external clients.

According to some examples of the present disclosure, a system is disclosed that automatically provides remote access to one or more serial port interfaces of one or more VMs of a cloud application. The system includes a coordination agent executed by one or more server computer devices. The coordination agent determines an Internet Protocol (IP) address of a VSPC module deployed with the one or more VMs of the cloud application, and causes a serial port interface of each virtual machine of the one or more VMs to be communicatively coupled with the VSPC module. The coordination agent also acquires one or more port numbers of the VSPC module associated with the one or more VMs. Each of the one or more port numbers can be used to remotely access the serial port interface of the corresponding virtual machine through the VSPC module. The coordination agent also causes the one or more port numbers and the IP address of the VSPC module to be provided to a client to provide the client remote access to the one or more serial port interfaces. In addition to the coordination agent, the system also includes the VSPC module, which is executed by the one or more server computing devices. The VSPC module allocates, based upon data received from the one or more VMs, local ports having the one or more port numbers. The VSPC module also associates, in a data structure, the one or more port numbers with identifiers of the corresponding one or more VMs. The VSPC module also receives, at ports identified by the one or port numbers, packets generated by one or more client devices seeking to communicate with the serial port interfaces of the one or more VMs, and sends each of the received packets to the virtual machine associated with the port at which the packet was received.

In some examples, the system further includes a cloud management module that receives a request from a client computing device to deploy the cloud application and, in response to the request, causes the one or more VMs and the VSPC module to be deployed.

In some examples, the cloud management module transmits, to the coordination agent, an indication that the cloud application is in a running state, and transmits, to the coordination agent, the IP address of the VSPC module.

In some examples, code for the one or more VMs and the VSPC module is saved as a single virtual appliance template. In some examples, the VSPC module is dedicated to the cloud application and does not serve any other cloud applications.

In some examples, the VSPC module comprises a daemon process.

In some examples, the IP address of the VSPC module determined by the coordination agent is an externally-accessible IP address, and the VSPC module also has an internal IP address.

According to some examples of the present disclosure, a method in a coordination agent executed by a server computing device for automatically providing remote access to one or more serial port interfaces of one or more VMs of a cloud application includes determining an IP address of a VSPC module deployed with the one or more VMs of a cloud application and that is specific to the cloud application. The method also includes causing a serial port interface of each of the one or more VMs to be communicatively coupled with the VSPC module. The method further includes acquiring, from the VSPC module, one or more port numbers of the VSPC module that are associated with the one or more VMs. Each of the one or more port numbers can be used to remotely access the serial port interface of the corresponding virtual machine through the VSPC module. The method also includes causing the one or more port numbers and the IP address of the VSPC module to be provided to a client to thereby enable the client to remotely access the one or more serial port interfaces.

In some examples, the method also includes, prior to the determining the IP address, detecting that the cloud application has reached a running state which indicates that the one or more VMs have been successfully deployed. In some examples, the determining of the IP address of the VSPC module includes receiving, from a cloud management module, the IP address.

In some examples, the causing the serial port interface of each of the one or more VMs to be communicatively coupled with the VSPC module includes transmitting, to the cloud management module, a request identifying the IP address to cause the cloud management module to configure each of the one or more VMs.

In some examples, the causing the one or more port numbers and the IP address of the VSPC module to be provided to a client includes transmitting an email message that includes the one or more port numbers and the IP address via a mail server.

In some examples, the causing the one or more port numbers and the IP address of the VSPC module to be provided to a client includes receiving, from the cloud management module, an email address of the client. In some examples the coordination agent comprises a daemon process.

According to some examples of the present disclosure, a method in a VSPC module executed by a server computing device for automatically providing remote access to one or more serial port interfaces of one or more VMs of a cloud application includes receiving, at the VSPC module, one or more packets from a virtual machine of the one or more VMs to create a connection for serial port traffic to be transmitted. The method also includes, in response to said receiving of the one or more packets, allocating a local port to be associated with the virtual machine, and associating, in a data structure, an identifier of the virtual machine with an identifier of the allocated local port. The method also includes sending the identifier of the allocated local port to a coordination agent to be provided to a client.

In some examples, the method also includes receiving, by the VSPC module from a remote computing device of the client at the local port, one or more packets carrying data to be passed to the serial port interface of the virtual machine; identifying, by the VSPC module, the virtual machine as a destination for the one or more packets based upon using the identifier of the allocated local port to perform a lookup in the data structure; and sending, by the VSPC module, the one or more packets to the virtual machine.

In some examples, the VSPC module comprises another virtual machine that was deployed together with the one or more VMs, and in some examples, the server computer device that executes the VSPC module also executes the one or more VMs.

According to some examples of the present disclosure, a non-transitory computer-readable storage medium stores instructions which, when executed by a processor of a computing device such as a server computing device, cause the server computing device to perform any of the above methods. According to some embodiments, an apparatus is described that comprises a processor and this non-transitory computer-readable storage medium.

Accordingly, some examples can quickly and automatically provide remote and private access to serial ports of deployed VMs. Additionally, if there is ever a need to restart such a "private" (i.e., per-deployed application) serial port concentrator no other application(s) or clients utilizing the shared physical computing resources will be impacted. Further, the performance can be significantly increased compared to the utilization of a common/shared serial port concentrator, which would typically be utilized by many different users. Additionally, in some examples the system is extremely portable across various sites, as it does not rely on an external/physical serial port concentrator to be setup - thus, a cloud application can be quickly deployed in any number of locations.

### BRIEF DESCRIPTION OF THE DRAWINGS

The invention may best be understood by referring to the following description and accompanying drawings that are used to illustrate embodiments of the invention. In the drawings:
Figure 1 is a high-level block diagram illustrating the use of a coordination agent and a virtual serial port concentrator (VSPC) module deployed within a cloud application according to some embodiments.
Figure 2 is a block diagram illustrating further detail regarding the coordination agent, VSPC module, and cloud management module of Figure 1 according to some embodiments.
Figure 3 is a combined sequence and flow diagram illustrating automatically providing remote access to one or more serial port interfaces of one or more virtual machines of a cloud application according to some embodiments.
Figure 4 illustrates an exemplary reporting message for communicating reachability information to enable automatic remote access to one or more serial port interfaces of one or more virtual machines of a cloud application according to some embodiments.
Figure 5 is a flow diagram illustrating an exemplary flow performed by a coordination agent for automatically providing remote access to one or more serial port interfaces of one or more virtual machines of a cloud application according to some embodiments.
Figure 6 is a flow diagram illustrating an exemplary flow performed by a VSPC module for automatically providing remote access to one or more serial port interfaces of one or more virtual machines of a cloud application according to some embodiments.
Figure 7 is a block diagram illustrating an exemplary data processing system that can be used in some embodiments.
Figure 8A illustrates an example functional block diagram of a server computing device implementing a VSPC module in accordance with some embodiments.
Figure 8B illustrates an example functional block diagram of a server computing device implementing a coordination agent in accordance with some embodiments.

### DESCRIPTION OF EMBODIMENTS

The following description describes methods, apparatuses, computer-readable media, and systems for providing remote access to virtual machine serial port interfaces of self-provisioned cloud applications through automated serial port concentration techniques. In this description, numerous specific details such as logic implementations, resource partitioning/sharing/duplication implementations, types and interrelationships of system components, and logic partitioning/integration choices are set forth in order to provide a more thorough understanding of embodiments of the present invention. It will be appreciated, however, by one skilled in the art that the invention may be practiced without such specific details. In other instances, control structures, gate level circuits, and full software instruction sequences have not been shown in detail in order not to obscure aspects of the invention. Those of ordinary skill in the art, with the included descriptions, will be able to implement appropriate functionality without undue experimentation. Accordingly, the figures and description provided herein are not intended to be restrictive.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein (except where otherwise indicated) to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

As used herein, a virtual machine (VM) is a software that, like a physical computer, runs an operating system and applications. Multiple VMs can operate on a same host system concurrently.

Cloud services providers strive to provide robust and complete solutions for clients that are as fully automated as possible, such that no or little manual (i.e., human) effort is required. However, one observed defect with current systems providing cloud architecture services (e.g., Infrastructure as a Service, or IaaS, providers) is that they do not provide automated, remote access to the serial ports of virtualized machines. Serial ports are important virtual hardware elements of VMs, just like Ethernet adaptors, hard drives, central processing units, memory, etc. One common use of serial ports is for debugging and/or configuration purposes, where an administrator can connect to a device using a serial port to acquire access to advanced configuration settings.

As more complex cloud applications continue to be developed, the need to have the virtual ports of VMs fully integrated into the provider's cloud system (to allow for self-service and automation) has become important.

However, current technologies for providing access to virtual serial ports are problematic. For example, some current commercial systems do not even support virtual machine serial ports. Yet other commercial systems can configure virtual serial ports to be connected to a physical serial port on the host computer, mapped to a file on the host computer, or directly connected with another virtual machine or application running on the same host computer. However, these approaches are problematic for modern, complex cloud applications employing potentially many VMs acting in concert, which can be placed on different host machines (i.e., server computing devices), and can be geographically separated and thus execute at different sites. Further, these commercial systems are centralized in nature, meaning that every virtual machine needs to be configured to point at an external device, thus creating an environment with a shared component prone to bottlenecks and security issues, not to mention it being a single point of failure/maintenance. Additionally, these solutions are slow, non-scalable, and often impractical, as substantial human effort may be involved (e.g., in setting up or configuring additional devices), and the locations of deployed VMs may not be static or known, or might even be changed over time (e.g., via migration techniques), requiring additional configuration efforts.

Accordingly, there is no solution available on the market that could address the growing need for automated, robust, secure, and fast access to potentially technologically- and geographically-disparate VMs utilized by modern complex systems that are quickly making their way to the cloud. Further, there is no solution that can fully support self-service of cloud applications (e.g., vApps) made of multiple VMs that require serial port access. For example, current systems are external to deployed cloud applications and require static configuration, do not support automation for continuous integration, are centralized and prone to bottlenecks for large environments, are difficult to manage/maintain in large environments, and must be setup at every deployment site to provide functionality. Moreover, there is no solution that can easily support rapid migration of deployed VMs while continuing to support serial port connectivity.

Accordingly, certain techniques are disclosed herein that can provide automated access to serial ports of VMs of "self-service" cloud applications. Accordingly, embodiments can provide immediate, private access to the serial ports of one or more deployed VMs to, for example, create a fully-isolated test bed.

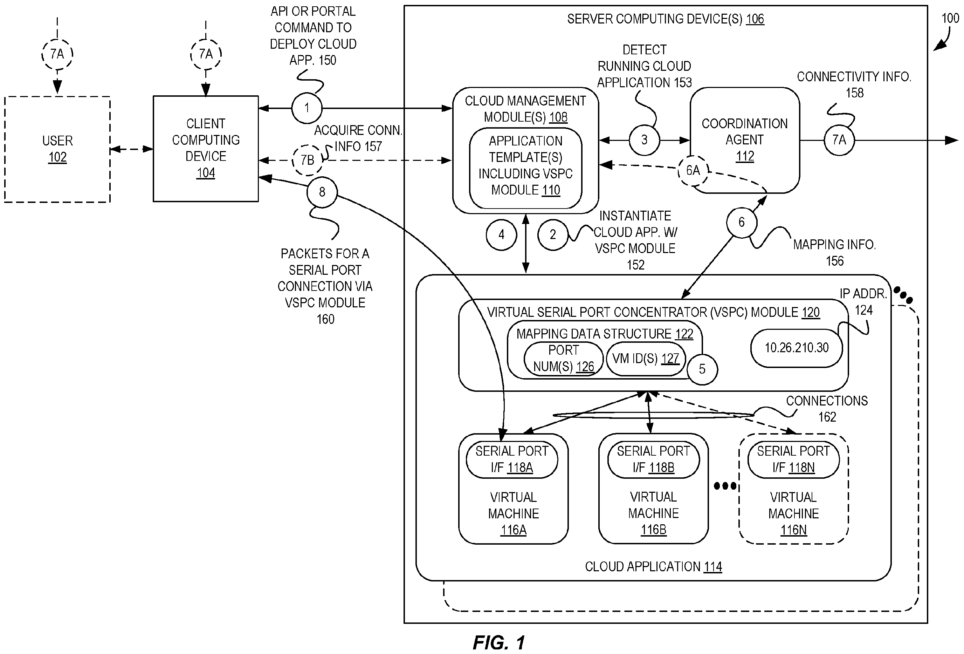

Figure 1 is a high-level block diagram illustrating the use of a coordination agent and a virtual serial port concentrator module deployed within a cloud application according to some embodiments. Figure 1 illustrates a system 100 including a user 102, a client computing device 104 that may be utilized by the user 102 (or act at least semi-autonomously - according to a configuration or program, for example), and one or more server computing devices 106 including a cloud management module 108, a coordination agent 112, and a deployed cloud application 114 including a virtual serial port concentrator (VSPC) module 120.

In some embodiments, the VSPC module 120 can be provided inside cloud application templates 110 (e.g., vApp templates, perhaps of a catalog of multiple templates available for use) along with the VM images of the cloud application 114, such that when a cloud application template 110 is selected by a user 102 and deployed as cloud application 114, the VSPC module 120 can quickly and easily offer private access to the VMs 116A-116N deployed as part of the same cloud application 114.

In some embodiments, the configuration agent 112 (e.g., a daemon process, etc.) can be configured to "watch for" or otherwise identify a deployed cloud application 114, detect that the VMs 116A-116N of the cloud application 114 have reached a "running" state (e.g., are "online" and at least partially operational), and cause the serial ports of the VMs 116A-116N to be configured such that they are connected to the VSPC module 120. The VSPC module 120 can allocate local ports to allow connectivity to each of its connected VMs 116A-116N, and can maintain a mapping data structure 122 associating port numbers 126 (or more generally, identifiers of the port - which may or may not be numeric) with identifiers 127 of the VMs 116A-116N. In some embodiments, the configuration agent 112, can provide some or all of this mapping information (and possibly other information, such as an externally-reachable IP address of the VSPC module 120) to the user 102, client computing device 104, and/or cloud management module 108. Accordingly, the client computing device 104 (or another computing device) can utilize this mapping information (e.g., a port number associated with a VM 116A) together with the external IP address 124 of the VSPC module 120 to gain access to the virtual serial port of that VM 116A via the VSPC module 120, which can relay (or forward, route, etc.) the serial port traffic between the client and the VM 116A.

Beneficially, every user can thus quickly acquire their own, fully-isolated cloud application accessible via the external IPs of the individual VMs and via different ports of the deployed VSPC module 120 (e.g., using telnet or Secure Shell (SSH), for example) to reach the serial ports of the VMs. Moreover, users can restart their private VSPC modules 120 without impacting any other users or applications deployed in the cloud. Additionally, performance is comparatively excellent as each user gets their own dedicated VSPC module 120, and the solution can be fully portable across various sites, as it does not rely on external/physical serial port concentrators to be deployed and configured at remote sites. Further, cloud applications can easily be exported to remote clouds with full functionality, VMs of cloud applications can easily be migrated from one device to another, and the functionality of the VSPC module 120 and/or configuration agent 112 can be implemented using lightweight software (e.g., small Linux-type VMs, etc.).

Accordingly, in some embodiments utilizing cloud application templates, users (as well as automated tools) can pick a cloud application template from a catalog to create a cloud application, start it, and get serial port access information in any of a number of ways, such as via cloud application metadata (e.g., provided by cloud management module 108) and/or via email or Short Message Service (SMS), thus allowing the users to begin configuring/testing/debugging their application to thus enable human and/or automated testing such as continuous integration. Accordingly, users needing access to cloud application serial port access no longer have to rely on static test beds, fear performance issues, or perform maintenance of underlying equipment; instead, these users now can use a true cloud self-service offering supporting VMs with serial port connectivity.

Turning back to Figure 1, the user 102 can utilize client computing device 104 to interact with cloud management module(s) 108. The client computing device 104 can be any of a variety of devices having computing and/or network functionality, including but not limited to a portable handheld device (e.g., a cellular telephone or tablet), a wearable device (e.g., a Google Glass® display), a general-purpose personal computer or laptop, workstation computer, or another type of electronic device, such as a thin-client computing device, a network-connectable gaming system, personal messaging device, etc.

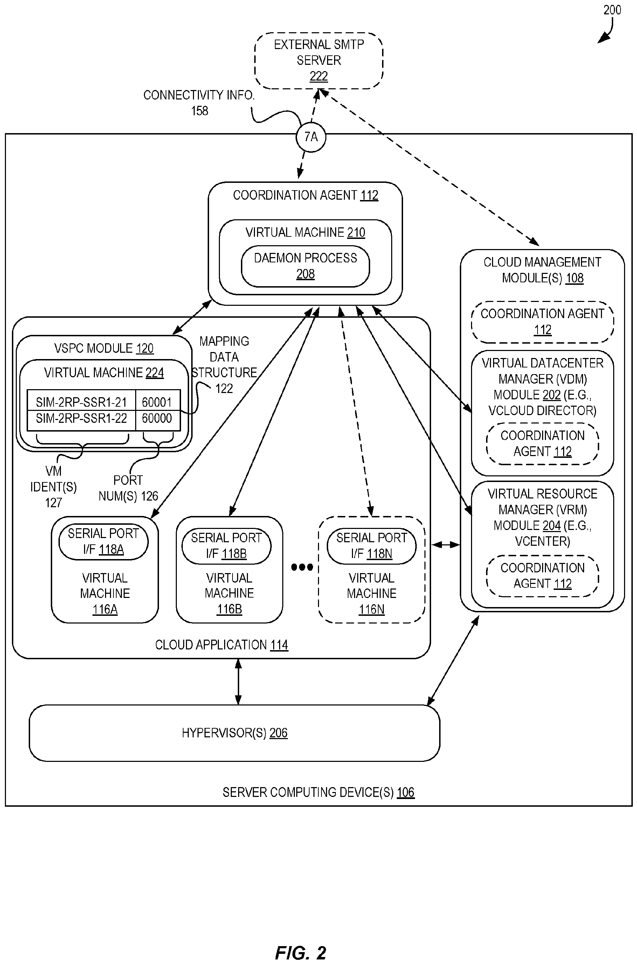

The cloud management module(s) 108 is a set of one or more modules providing users the ability to manage resources in a cloud or datacenter. For example, cloud management module 108 can provide a web interface/portal to the user 102 (or an Application Program Interface (API) to the client computing device 104) to allow users to select, create, edit, etc., a cloud application 114 that is deployed or is to be deployed. Further detail regarding the cloud management module 108 will be provided later herein with respect to Figure 2.

Thus, at circle '1', the client computing device 104 can interact with the cloud management module 108 using an API or web portal command 150 to deploy a cloud application 114. For example, the cloud management module 108 may store one or more application templates including a VSPC module 120. The user 102 could select one template for deployment by having the client computing device 104 send the API or web portal command 150 to the cloud management module 108.

The cloud application 114 can be any of a variety of types of applications of a variety of formats. As one example, the cloud application 114 could be a vApp, which is a group of one or more VMs (that can be managed as a single object) which may communicate over a network (which may be isolated) and utilize resources and services in a deployed environment. Thus, the cloud application 114 could be a fairly complex, multi-tiered application that is implemented by multiple interdependent VMs. vApps can be thought of as a container for VMs that offers resource controls and management for those VMs - e.g., a portable, self-contained unit that holds multiple VMs, typically making up a multi-tiered application (like a web server, database, and security server). vApps can offer resource controls for the VMs inside the container and define network configurations. vApps can be extremely portable, as everything contained can be transferred to another virtual infrastructure, and entire vApps can be powered on, powered off, suspended, shutdown, and/or cloned.

In some embodiments, the cloud application 114 can be instantiated by the cloud management module(s) 108 from an application template 110. A cloud application 114 template (e.g., a vApp template), in some embodiments, is a virtual machine image that is loaded with an operating system, applications, and possibly data. Cloud application templates 110 ensure that VMs are consistently configured across an entire organization or across multiple users. In some embodiments, a VSPC module 120 is included within a cloud application template as a sort of infrastructural component for the application - i.e., is not a part of directly providing the desired functionality of the particular cloud application 114 defined by the template.

Thus, at circle '2' of Figure 1, the cloud management module(s) 108 instantiate 152 the desired cloud application 114 with the VSPC module 120. Thus, according to the definition of the cloud application 114 (as represented by the corresponding application template 110), the cloud management module(s) 108 will cause the one or more VMs 116A-116N and the VSPC module 120 to be "spun up" (or executed) according to the application template 110, which can include launch orderings and various configurations. As illustrated, each of the one or more VMs 116A-116N includes a serial port interface 118A-118N - however, in various embodiments, not every VM 116A-116N need to have a serial port interface 118A-118N, and in some embodiments, one or more of the VMs 116A-116N could have more than one serial port interface 118A-118N.

At circle '3', the coordination agent 112 can detect that some or all of the cloud application 114 has entered the "running" state. For example, in some embodiments the coordination agent 112 can detect when a particular VM 116A of the cloud application 114 has successfully "started up" and become ready for operation, and in some embodiments the coordination agent 112 detects when the entire cloud application 114 has successfully "started up."

As illustrated at circle '3', the coordination agent 112 in this depicted embodiment communicates with the cloud management module(s) 108 to make this detection of the running cloud application 114. For example, the coordination agent 112 could perform "polling," such as periodically sending requests (e.g., API calls, function calls, etc.) to the cloud management module(s) 108 soliciting a response indicating whether a new cloud application 114/ VM 116 has entered the running state or a response describing the execution state of all cloud applications 114/ VMs 116 under the management of the cloud management module(s) 108. In other embodiments, the cloud management module(s) 108 itself could be configured to "push" certain notifications to the coordination agent 112. For example, the cloud management module(s) 108 could be configured to send a notification every time a particular cloud application 114 (or any cloud application 114 or subcomponent thereof) changes state or enters the "running" state. As another example, the cloud management module(s) 108 could be configured to send a notification periodically describing the execution state of one or more cloud applications 114 or subcomponents thereof.

In response, the coordination agent 112 can interact with the cloud management module(s) 108 to cause the serial port interfaces 118A-118N of the VMs 116A-116N to be connected with the VSPC module 120. For example, the coordination agent 112 could interact with the cloud management module(s) 108 to acquire details of the cloud application 114 (e.g., a list of its VMs), identify the VSPC module 120 within the cloud application 114, identify an IP address 124 (e.g., an external IP address) of the VSPC module 120, and instruct the cloud management module(s) 108 to, at circle '4', connect the serial port interfaces 118A-118N of the VMs 116A-116N with the VSPC module 120. As a result, in some embodiments, the VMs 116A-116N will attempt to open connections 162 with the VSPC module 120.

For each connection 162, the VSPC module 120, at circle '5', can allocate a local port to be used for receiving serial port-related traffic from other entities that should be destined to the serial port interfaces 118A-118N of the VMs 116A-116N. The VSPC module 120 can then associate an identifier of the allocated port (e.g., a port number 126) with an identifier 127 of the corresponding VM 116A (e.g., a hostname, IP address of the VM 116A, socket identifier of the associated connection 162, etc.). In some embodiments, this association information is stored within a mapping data structure 122. This mapping data structure 122 may be persisted (e.g., stored in a flash memory, hard disk, etc.) in a non-volatile memory. This can allow for, among other things, the mappings to be restored a next time a same cloud application 114 (e.g., vApp) is powered "on" again after being spun down, and can support individual disconnections and/or reconnections of client VM 116A serial port(s) 118A to the previously reserved port(s) of the VSPC module 120.

At this point, at circle '6' the coordination agent 112 can acquire mapping information 156 from the VSPC module 120. In some embodiments, the VSPC module 120 is configured to report this information 156 to the coordination agent 112 upon a new association being made (or periodically), but in some embodiments the coordination agent 112 may instead request this information 156 from the VSPC module 120 (e.g., via polling, etc.). In some embodiments, the mapping information 156 includes the associated allocated local port numbers 126 and the VM identifiers 127.

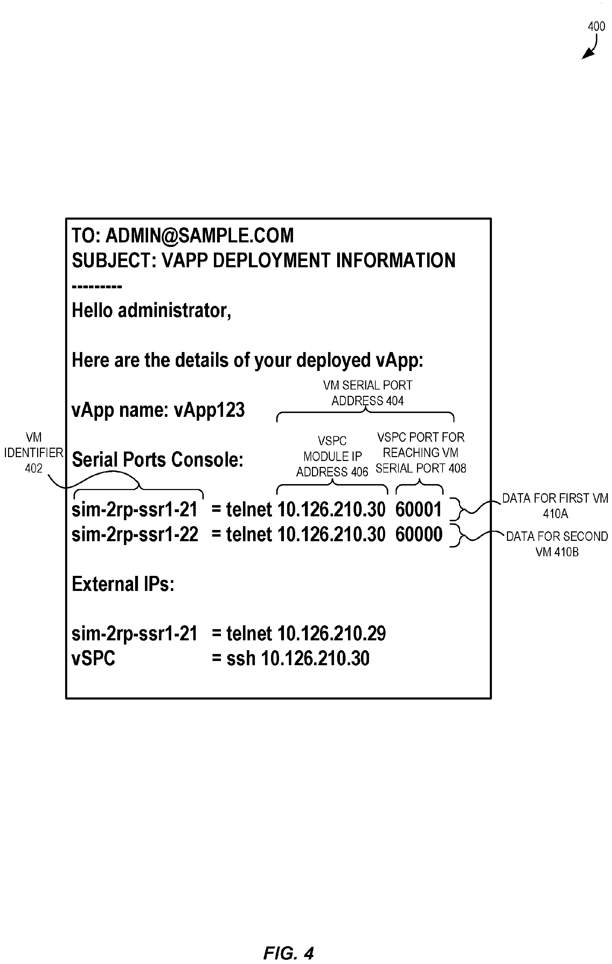

Optionally, at circle '6A' the coordination agent 112 can provide this mapping information 156 back to the cloud management module(s) 108 (e.g., to update the metadata associated with the deployed cloud application 114), thus enabling other modules or devices the ability to determine the port numbers 126 allowing access to the serial port interfaces 118 via the cloud management module(s) 108. For example, at circle '7B' the client computing device 104, which may already be in communication with the cloud management module(s) 108 (e.g., using a web portal or API), could be provided the connectivity information 157 from the cloud management module(s) 108, which can include the mapping information 156 and perhaps the IP address of the VSPC module 120. Alternatively or additionally, at circle '7A' the coordination agent 112 can output/provide the connectivity information 158. This information 158 can be provided to a client computing device 104 (e.g., in an email, SMS, push notification) or user 102 (e.g., via another computing device, via a display device, etc.). One possible example of connectivity information 158 including mapping information 156 will be provided later herein with regard to Figure 4.

At this point, the client computing device 104 can use the received connectivity information 157/158 to connect to the virtualized serial port interface 118A of a desired VM 116A by communicating with (e.g., sending packets 160 to) the VSPC module 120 using the IP address 124 and the particular port number 126 associated with the desired "destination" VM 116A. For example, the client computing device 104 can begin a telnet or SSH communication (or other protocol) by sending packets 160 carrying protocol-appropriate data in IP packets having a destination IP address 124 of the VSPC module 120 and the destination port number 126 allocated by the VSPC module 120 for reaching the VM 116A.

Upon receipt of the packet(s) 160, the VSPC module 120 can use the mapping data structure 122 to determine where to send the packet(s) 160. For example, the VSPC module 120 can perform a lookup into the mapping data structure 122 using the received port number of the packets to search for a matching port number 126 and identify the associated virtual machine identifier 127 (e.g., hostname, IP address, socket identifier, etc.) that can be used to determine where the packet(s) 160 should be sent.

Figure 2 is a block diagram 200 illustrating further detail regarding the coordination agent 112, VSPC module 120, and cloud management module(s) 108 of Figure 1 according to some embodiments.

In this diagram 200, the coordination agent 112 is illustrated as comprising a virtual machine 210 executing a daemon process 208. For example, in one implementation the VM 210 executes a lightweight Linux-based operating system and the daemon can be a program executing as a service. In some embodiments, the existence of the daemon 208 is checked periodically (e.g., using a cronjob) and restarted, if necessary. In some embodiments, the daemon 208 can communicate with other entities (e.g., cloud management module(s) 108 or VSPC module 120) using an API (e.g., a REST API) and/or telnet/SSH interface. In some embodiments, the daemon 208 can communicate with an external Simple Mail Transfer Protocol (SMTP) mail server 222 to provide connectivity information 158 for the serial port interfaces 118.

In some embodiments, the coordination agent 112 can be separate from the cloud management module(s) 108, thus allowing the use of various third-party provided cloud management module(s) 108. However, in some embodiments, the coordination agent 112 can be integrated within various components of the cloud management module(s) 108, as illustrated with dashed lines.

The cloud management module(s) 108 of the illustrated embodiment include at least two distinct but interrelated modules: a virtual datacenter manager (VDM) module 202 and a virtual resource manager (VRM) module 204. As described above, either of these could include a coordination agent 112.

The VRM module 204 can be a central management application that controls virtual machines in a computing environment. One exemplary implementation of a VRM module 204 is vCenter Server by VMware. In some embodiments, VRM module 204 can be an application that manages virtual infrastructure hosts, virtual machines, and virtual resources (CPU, memory, storage, and network). The VRM module 204 may interact with one or more hypervisors 206 to control/manage the VMs 116A-116N of the various involved cloud applications 114. A hypervisor can be thought of as a platform that allows multiple operating systems to run on a host computer at the same time. One exemplary implementation of a hypervisor 206 is the vSphere Hypervisor (ESXi) from VMware.

In contrast, the VDM module 202 is at a higher level of abstraction than the VRM module 204, and can manage multiple virtual infrastructures and abstract the virtual infrastructure resources into software-defined storage, networking, security, and availability resources. Thus, in some embodiments the VDM module 202 can enable self-deployment of VMs via an included web portal and/or API. One exemplary implementation of a VDM module 202 is vCloud Director by VMware.

Thus, in some embodiments users 102 (via client computing devices 104) do not have to be aware of the VRM module 204 and do not need to be concerned with hosts, clusters, resource pools, etc., and do not need to be concerned with what VMs are on what hosts, whether there are cluster resources available to run VMs, whether the VM is secure, etc. Instead, all of these concerns can be abstracted away by the VDM module 202 so users only need to be concerned with their own resources.

The illustrated VSPC module 120 shows a partial mapping data structure 122 having two entries: a first entry with a VM identifier 127 of "SIM-2RP-SSR1-21" (a hostname, perhaps of the first VM 116A) associated with a local port number 126 of "60001" that provides external access to the serial port interface 118A of the first VM 116A. The illustrated mapping data structure 122 also has a second entry with a VM identifier 127 of "SIM-2RP-SSR1-22" (another hostname, perhaps of the second VM 116B) associated with a local port number 126 of "60000" for the second VM 116B.

In this example, the illustrated VSPC module 120 includes a virtual machine 224 that could run a program as a service, which can be started at boot of the VM 224 and can be checked periodically (e.g., via a cronjob).

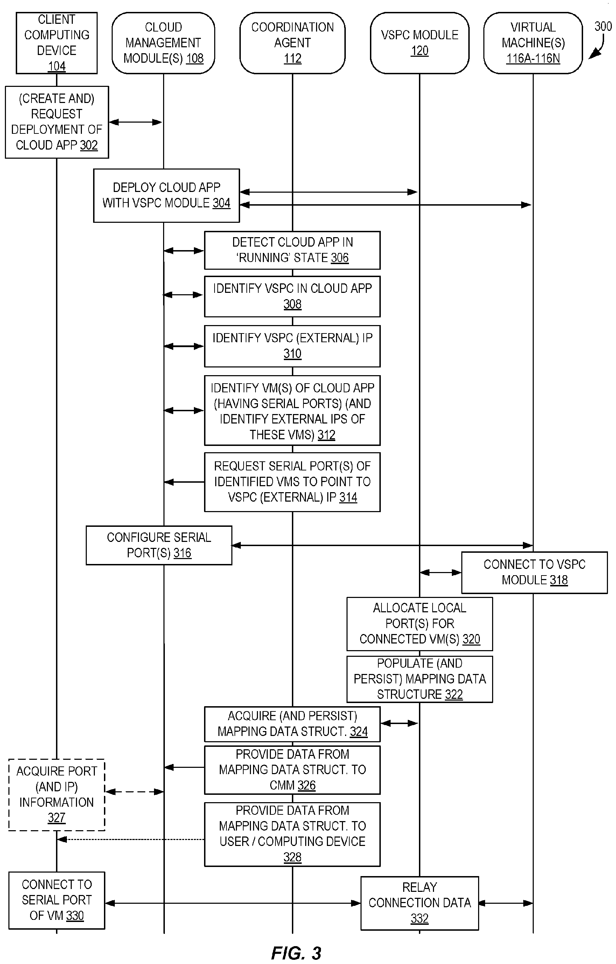

Figure 3 is a combined sequence and flow diagram 300 illustrating automatically providing remote access to one or more serial port interfaces of one or more virtual machines of a cloud application according to some embodiments. Figure 3 includes operations perform by, and signaling between, client computing device 104, cloud management module(s) 108, coordination agent 112, VSPC module 120, and VMs 116A-116N, such as those illustrated in Figure 1.

At block 302, the client computing device 104 requests deployment of a cloud application 114. For example, the client computing device 104 can interact with a web portal provided by cloud management module(s) 108 (e.g., VDM module 202) to instruct the cloud management module(s) 108 to deploy a cloud application 114. In some embodiments, the client computing device 104 may transmit commands to the cloud management module(s) 108 that define the cloud application 114 or aspects thereof, such as desired resource types, resource amounts, etc., for the cloud application 114. In other embodiments, block 302 may include the client computing device 104 sending API requests or making function calls (or the like) to create/define and/or request the deployment of cloud application 114.

In some embodiments, block 302 includes the client computing device 104 acquiring a catalog (e.g., a list of one or more) cloud applications 114 from the cloud management module(s) 108, presenting descriptors of the catalog to a user, receiving a user input selecting one of the cloud applications 114 from the catalog, and the client computing device 104 sending a request to the cloud management module(s) 108 to deploy that selected cloud application 114.

In some embodiments, the VSPC module 120 is "included" with the cloud application 114, which may or may not be explicitly "shown" to the client computing device 104. For example, the client computing device 104 may or may not explicitly be aware of the VSPC module 120 being included in the cloud application 114. In some embodiments, the cloud management module(s) 108 adds the VSPC module 120 to the cloud application 114.

At block 304, in response to block 302, the cloud management module(s) 108 deploys the cloud application 114. Block 304 can include the cloud management module(s) 108 causing the VSPC module 120 and the VMs 116A-116N to execute, which can include communications with hypervisor(s) 206.

At some point, at block 306 the coordination agent 112 detects the cloud application being in a "running" state. Block 306 may occur multiple times (e.g., on a per-virtual-machine basis), where flow may continue for each "running" virtual machine (of the VMs 116A-116N) through one or more of blocks 308-322; however, in some embodiments block 306 may occur just once for a deployed cloud application 114, such as when all of the required VMs 116A-116N have entered a "running" state. A running state is a point where a virtual machine (or all virtual machines) are substantially operational for their desired purpose, and can include when the virtual machine is "up and running" - e.g., has successfully booted an operating system and/or applications.

Block 306 can include the coordination agent 112 "polling" the cloud management module(s) 108 for notifications of newly-deployed cloud applications 114 and/or VMs 116A-116N, and/or can include the cloud management module(s) 108 being configured to report such deployments (or VMs 116A-116N reaching a "running" state) directly to the coordination agent 112 or to an intermediary (e.g., a log file) where the coordination agent 112 can detect the occurrence of the "running" state being met. In some embodiments, though, the coordination agent 112 queries the cloud management module(s) 108 for a list of cloud applications 114 in order to identify any of the cloud applications 114 that are running but have not yet had serial ports configured. For example, in some embodiments the coordination agent 112 seeks to identify any cloud applications 114 that do not have metadata stored at the cloud management module(s) 108 describing a fully-configured VSPC module 120 for that cloud application 114.

At block 308, the coordination agent 112 can identify the VSPC module 120 of the cloud application 114. For example, the coordination agent 112 can query the cloud management module(s) 108 for a list of elements of the cloud application 114 (e.g., a list of all virtual machines and/or entities of the application), and identify which of the elements is the VSPC module 120. For example, in some embodiments an entry for the VSPC module 120 in the list of elements can be identified by using a common element identifier (or portion thereof, such as a "vspc" prefix in an element identifier) that is known to be used by (or, assigned to) VSPC modules. However, in some embodiments the coordination agent 112 can send a request message to the cloud management module(s) 108 seeking information for a VSPC module, which can be returned by the cloud management module(s) 108.

At block 310, the coordination agent 112 can identify an IP address of the VSPC module 120. In some embodiments, the IP address is an "external" IP address, meaning that it can be utilized by a client outside of the cloud application 114 and/or set of server computing devices 106 executing the cloud application 114. For example, an external IP address may be thought of as a "public" IP address or globally routable unicast IP address. However, in some embodiments the VSPC module 120 can be an "internal" or "private" IP address used in a private network.

At block 312, the coordination agent 112 can identify the VMs 116A-116N of the cloud application 114. In some embodiments, the coordination agent 112 is configured to identify only those of all VMs 116A-116N of the cloud application 114 that include serial port interfaces 118A-118N. In some embodiments, the coordination agent 112 then identifies IP addresses (e.g., external IP addresses or internal IP addresses) utilized by these identified VMs 116A-116N. The identification of these VMs 116A-116N can occur similar to the operations described with regard to block 308, and thus the coordination agent 112 may acquire information describing the cloud application 114 in a variety of ways (e.g., responsive to making a request to the cloud management module(s) 108, responsive to interacting with a separate entity (e.g., a log file), receiving the information from the cloud management module(s) 108 without having made a request, etc.).

At block 314, the coordination agent 112 can request that the serial ports of the identified VMs 116A-116N (from block 312) be pointed to the identified IP address (from block 310) of the VSPC module 120. In some embodiments, block 314 includes the coordination agent 112 transmitting a request to the cloud management module(s) 108 to perform this functionality. However, in other embodiments the coordination agent 112 can be configured with logic necessary to perform this task on its own by directly configuring each of the VMs 116A-116N (not illustrated here).

In response, at block 316 the cloud management module(s) 108 configure the serial port interfaces 118 of the VMs 116A-116N to "point" to the IP address of the VSPC module 120. This causes, at block 318, each of the one or more VMs 116A-116N to connect to the VSPC module 120 (e.g., open a connection such as a Transmission Control Protocol (TCP) connection, telnet connection, secured connection, etc.). These connections can later be used, by the VSPC module 120, to transmit data from one or more clients (e.g., client computing device 104) to the serial port interface(s) 118A-118N of VMs 116A-116N, and similarly receive data from the serial port interface(s) 118A-118N of VMs 116A-116N to be transmitted to the one or more clients.

For the VMs 116A-116N that are "connected" to the VSPC module 120 (at block 318), the VSPC module 120 can be configured to, at block 320, allocate a local port for each such VM 116A-116N. This can include selecting a random port and determining whether it is (or is not) already used, or this can include selecting a port from a list of ports reserved for the VSPC module 120 to use for this specific purpose.

Then, at block 322, the VSPC module 120 can populate a mapping data structure (e.g., a table, an array, a linked list, a hash map, etc.) to associate (or "map") identifiers of the allocated ports with identifiers of the corresponding VMs 116A-116N. In some embodiments, the identifiers of the allocated ports can be port numbers, and in some embodiments the identifiers of the VMs 116A-116N can be virtual machine hostnames or nicknames, connection identifiers (e.g., ports, tuples, connection handles, etc.) of the connections with the VMs 116A-116N, IP addresses of the VMs 116A-116N, etc. In some embodiments, this mapping data structure in block 322 is persisted to a non-volatile storage, which can advantageously maintain these mappings for when a cloud application 114 is brought offline and then online again, or for when a virtual machine might crash and restart, etc., to enable seamless serial port connectivity for the VMs 116A-116N.

At block 324, the coordination agent 112 can then acquire data from the mapping data structure. In some embodiments, the coordination agent 112 transmits a request to the VSPC module 120 for data from the mapping structure, such as a complete set of association entries that map port identifiers to VM identifiers. However, in other embodiments the VSPC module 120 can be configured to provide this information to the coordination agent 112 without receiving a request. In some embodiments, the coordination agent 112 persists this data in non-volatile storage.

At block 326, the coordination agent 112 can then provide data from the mapping data structure to the cloud management module(s) 108, such as a partial or complete set of entries that map the allocated ports of the VSPC module 120 to corresponding identifiers of the VMs 116A-116N. For example, in some embodiments, this data can be saved with cloud application 114 metadata stored by the cloud management module(s) 108 and then, possibly, provided to other devices (e.g., client computing device 104) at some point - see optional block 327, where the client computing device 104 acquires the port (and possibly the IP address of the VSPC module 120) information.

However, in some embodiments, at block 328 the coordination agent 112 causes data from the mapping data structure to be provided to the client computing device 104 and/or user as a "reporting message." In this figure, the arrow is illustrated using small dots to indicate that the connection, in many but not all cases, may not be a direct connection. For example, in some embodiments the coordination agent 112 can send this data to an email server, which then may send the email to another email server of the user and then, ultimately, delivered to a mail application of client computing device 104. An example of such an email is provided later herein with regard to Figure 4. This destination address utilized by the coordination agent 112 (e.g., the email address) can be determined by the coordination agent 112 based upon a new or previous query made to the cloud management module(s) 108, such as during the messaging in one or more of blocks 306-314.

In another embodiment, coordination agent 112 can send the mapping data to ultimately arrive at the client computing device 104 via another type of electronic message, including but not limited to SMS message, instant/personal message, voicemail, fax, pager, Hypertext Transfer Protocol (HTTP) POST message, etc.

Accordingly, at some point the client computing device 104 has acquired an IP address of the VSPC module 120 as well as one or more ports that it can utilize to reach particular VMs 116A-116N. Then, to utilize a virtualized serial port 118A of a particular VM 116A, the client computing device 104 can connect at block 330 by sending a message using the VSPC module 120 IP address as the destination address and the particular port number as the destination port.

At block 332, the VSPC module 120 will receive this message, and can utilize the mapping data structure (and the identifier of the port at which the message arrived at) to determine which of the one or more VMs 116A-116N the message is to be relayed to. In some embodiments, the VSPC module 120 opens a new connection for this communications session that is specific to the client computing device 104, but in other embodiments an existing connection can be utilized.

At this point, the client computing device 104 has a "connection" formed with the virtualized serial port of the target VM 116A, and can perform any configuration, testing, etc., tasks that it desires. For example, in some embodiments, this connection can be utilized to run automated tests, such as for continuous integration.

Figure 4 illustrates an exemplary reporting message 400 for communicating reachability information to enable automatic remote access to one or more serial port interfaces of one or more virtual machines 116 of a cloud application 114 according to some embodiments. This reporting message 400 comprises an email message, and is illustrated with only some fields of a typical email message. For example, a "TO" field and a "SUBJECT" field are illustrated whereas a "FROM" field is not - as is known to those of skill in the art, there are many potential fields omitted here that are not shown to avoid obscuring aspects of embodiments of the invention.

In this example, the reporting message 400 informs the user of a cloud application 114 of a name of the cloud application (or "vApp"): vApp123. The reporting message 400 also provides data for a first VM 410A and data for a second VM 410B that indicates that there are two virtual machines of the cloud application 114 with serial port access available. In this example, two VM identifiers 402 are illustrated: sim-2rp-ssr1-21 and sim-2rp-ssr1-22. For each of these VM identifiers 402, a VM serial port address 404 is provided. Each VM serial port address 404 includes a VSPC module IP address 406 (of "10.126.210.30") and the allocated VSPC module port 408 for reaching the associated VM serial port: "60001" for the first, and "60000" for the second. In this example, the reporting message 400 indicates a type of connection - i.e., that the user is to create a telnet connection to connect to the serial ports. Of course, many other connection types can be used, which can be potentially quite different (e.g., an encrypted connection type) from what is commonly supported by a serial port (e.g., plaintext telnet) or used between the VSPC module 120 and the VMs 116A-116N (e.g., possibly plaintext).

The reporting message 400 also indicates what the external IP addresses are for one of the VMs ("sim-2rp-ssr1-21" is 10.126.210.29) and the external IP address of the VSPC module 120 ("vSPC" is 10.126.210.30, having a connection type of "ssh"). Thus, the second VM ("sim-2rp-ssr-22") does not currently have an external IP address configured, though it still can be reached via its provided serial port connectivity as described herein.

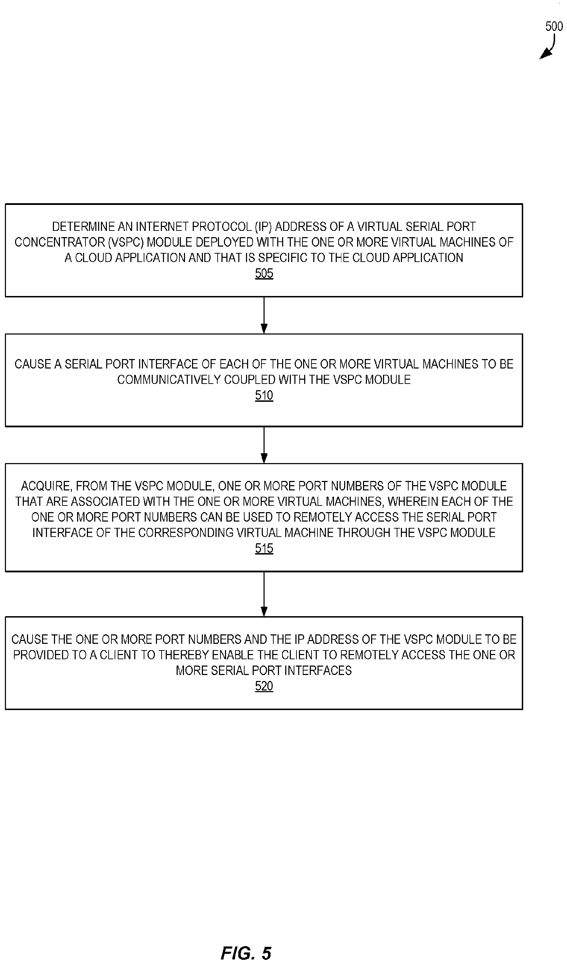

Figure 5 is a flow diagram illustrating an exemplary flow 500 performed by a coordination agent 112 for automatically providing remote access to one or more serial port interfaces 118A-118N of one or more VMs 116A-116N of a cloud application 114 according to some embodiments. In some embodiments, these operations can be performed by the server computing device(s) 106 of Figure 1.

The operations in this and other flow diagrams will be described with reference to the exemplary embodiments of the other figures. However, it should be understood that the operations of the flow diagrams can be performed by embodiments of the invention other than those discussed with reference to the other figures, and the embodiments of the invention discussed with reference to these other figures can perform operations different than those discussed with reference to the flow diagrams.

At block 505, the flow 500 includes determining an IP address of a VSPC module deployed with one or more virtual machines of a cloud application. The VSPC module is specific to the cloud application; thus, it is not "shared" by any other cloud application. In some embodiments, the VSPC module comprises a VM executing a virtual serial port concentrator module, and the VM is deployed with the one or more other VMs of the cloud application 114. In some embodiments, the VSPC module executes on a same one more server computing devices with the cloud application VM(s).

At block 510, the flow 500 includes causing a serial port interface of each of the one or more virtual machines to be communicatively coupled with the VSPC module. In some embodiments, this includes transmitting a command to a cloud management module - which deployed the cloud application and provides management functionality for the cloud application - to couple the serial port(s) of the VM(s) with the VSPC module. In some embodiments, the command identifies the one or more VM(s) and the determined IP address of the VSPC module (e.g., from block 505) that the serial port(s) are to be coupled with. In some embodiments, the VM(s) are thereby caused to open communication connections with the VSPC module.

At block 515, the flow 500 includes acquiring, from the VSPC module, one or more port numbers of the VSPC module that are associated with the one or more virtual machines. Each of the one or more port numbers can be used to remotely access the serial port interface of the corresponding virtual machine through the VSPC module. In some embodiments, block 515 also includes acquiring, for each of the one or more port numbers of the VSPC module, identifiers of the corresponding VM that can be accessed using that port number.

At block 520, the flow 500 includes causing the one or more port numbers and the IP address of the VSPC module to be provided to a client/user, to thereby enable the client/user to remotely access the one or more serial port interfaces. In some embodiments, block 520 includes providing at least the one or more port numbers (and possibly identifiers of the corresponding VMs) to the cloud management module(s) to be saved as metadata for the cloud application, where the client/user can utilize a web portal or API provided by the cloud management module(s) to access the one or more port numbers. In some embodiments, block 520 includes transmitting a message to be delivered to the client/user. This can include, by way of example, sending at least the one or more port numbers (and possibly the external IP address of the VSPC module) using an email message, SMS message, API call, etc. With the port numbers and the external IP address of the VSPC module, the client is thus able to privately and efficiently utilize the virtual serial port interface(s) of the VM(s) of the deployed cloud application.

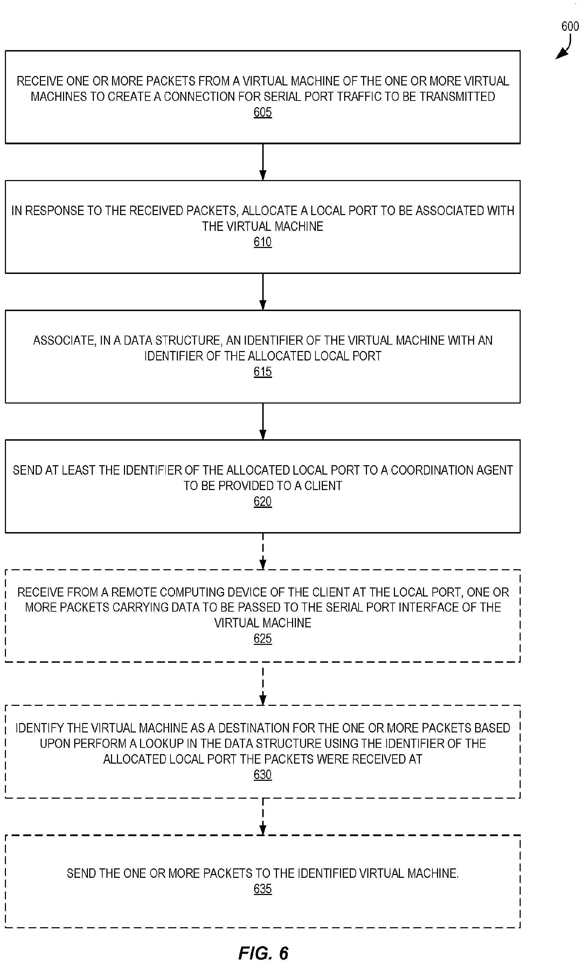

Figure 6 is a flow diagram illustrating an exemplary flow 600 performed by a VSPC module 120 for automatically providing remote access to one or more serial port interfaces 118A-118N of one or more VMs 116A-116N of a cloud application 114 according to some embodiments. In some embodiments, these operations can be performed by the server computing device(s) 106 of Figure 1.

At block 605, the flow 600 includes receiving one or more packets from a virtual machine of the one or more virtual machines to create a connection for serial port traffic to be transmitted between the VM(s) and other devices.

At block 610, the flow 600 includes, in response to receiving the packets at block 605, allocating a local port to be associated with the virtual machine that sent the packet(s), and at block 615, associating an identifier of the virtual machine with an identifier of the allocated local port in a data structure. In some embodiments, the identifier of the allocated local port comprises a port number. In various embodiments, the identifier of the virtual machine can be a variety of types of information, including one or more of a hostname, a socket identifier or other type of connection identifier, an IP address, etc.

At block 620, the flow 600 includes sending at least the identifier of the allocated local port to a coordination agent to be provided to a client. In some embodiments, block 615 also includes sending one or more identifiers of the VMs 116A-116N, each of which may be associated with one of the identifiers of the local ports.

At block 625, the flow 600 optionally includes receiving, at the allocated local port from a remote computing device of the client, one or more packets carrying data to be passed to the serial port interface of the virtual machine. At block 630, the flow 600 optionally includes identifying the virtual machine as the ultimate destination for the one or more packets based upon performing a lookup in the data structure. The lookup can utilize the identifier of the allocated local port at which the packets were received at, and can identify a VM identifier that is associated with the local port identifier. At block 635, the flow 600 optionally includes sending the one or more packets to the identified virtual machine.

The techniques and operations disclosed herein can be implemented, in whole or in part, using one or more electronic devices (also referred to herein as computing devices). An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Some electronic devices also include a set or one or more physical network interface(s) to establish network connections (to transmit and/or receive code and/or data using propagating signals) with other electronic devices. One or more parts of some embodiments may be implemented using different combinations of software, firmware, and/or hardware.

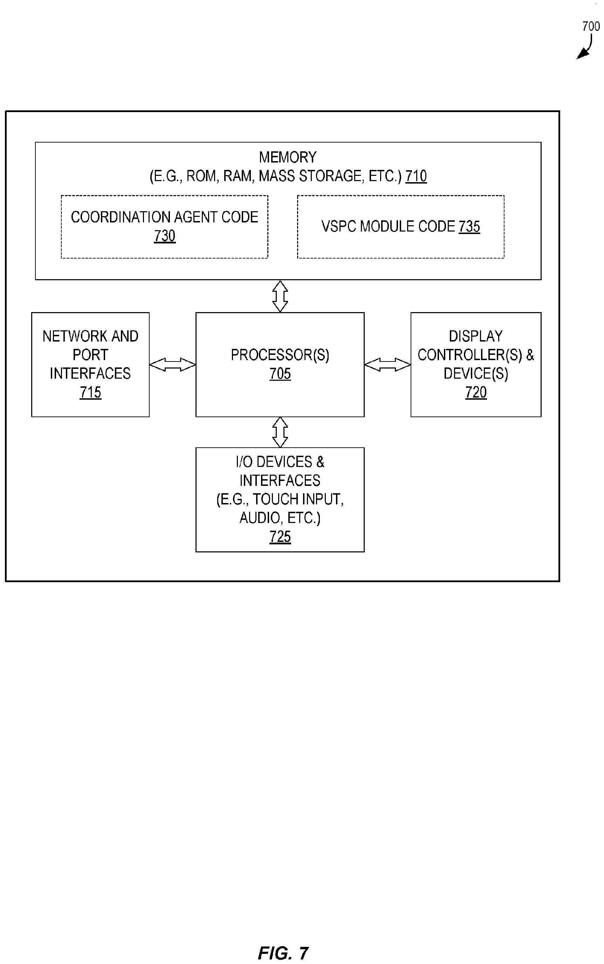

Figure 7 is a block diagram illustrating an exemplary data processing system 700 that can be used in some embodiments. Data processing system 700 includes one or more microprocessors 705 (or processing circuits) and connected system components (e.g., multiple connected chips). Alternatively, the data processing system 700 can be a system on a chip. One or more such data processing systems 700 may be utilized to implement the functionality of client computing device 104 and/or server computing device(s) 106.

The illustrated data processing system 700 includes memory 710, which is coupled to one or more microprocessor(s) 705. The memory 710 can be used for storing data, metadata, and/or programs for execution by the one or more microprocessors) 705. For example, the depicted memory 710 may store coordination agent code 730 and/or VSPC module code 735 that, when executed by the microprocessor(s) 705, causes the data processing system 700 (e.g., server computing device(s) 106) to implement a VSPC module 120 and/or coordination agent 112 for providing remote access to virtual machine serial port interfaces of self-provisioned cloud applications through automated serial port concentration techniques. The memory 710 may include one or more of volatile and non-volatile memories, such as Random Access Memory ("RAM"), Read Only Memory ("ROM"), a solid state disk ("SSD"), Flash, Phase Change Memory ("PCM"), or other types of data storage. The memory 710 may be internal or distributed memory.

The data processing system 700 also includes input/output (I/O) devices and interfaces 725, which may include a microphone and/or a speaker for, for example, playing back music or other audio, receiving voice instructions to be executed by the microprocessor(s) 705, playing audio notifications, etc. A display controller and display device 720 provides a visual user interface for a user, e.g., graphical user interface (GUI) elements or windows.

The data processing system 700 also includes one or more input or output ("I/O") devices and interfaces 715, which are provided to allow a user to provide input to, receive output from, and otherwise transfer data to and from the system 700. These I/O devices and interfaces 715 may include a mouse, keypad, keyboard, a touch panel or a multi-touch input panel, camera, optical scanner, other known I/O devices or a combination of such I/O devices. The touch input panel can be a single touch input panel that is activated with a stylus or a finger, or a multi-touch input panel that is activated by one finger or a stylus or multiple fingers. The touch input panel can be capable of distinguishing between one or two or three or more touches, and can be capable of providing inputs derived from those differentiated touches to other components of the processing system 700.

The data processing system 700 can also include a set of network and port interfaces that can be utilized for communicating with another device or system. For example, the network and port interfaces 715 can include a connector for a dock or a connector for a Universal Serial Bus (USB) interface, FireWire, Thunderbolt, Ethernet, etc., to connect the system 700 with another device, external component, or network. Exemplary network and port interfaces 715 can also include wireless transceivers, such as an Institute of Electrical and Electronics Engineers (IEEE) 802.11 transceiver, an infrared transceiver, a Bluetooth transceiver, a wireless cellular telephony transceiver (e.g., 2G, 3G, 4G), or another wireless protocol to connect the data processing system 700 with another device, external component, or network, and receive stored instructions, data, tokens, etc. It will be appreciated that one or more buses may be used to interconnect the various components shown in Figure 7.

It will be appreciated that additional components, not shown, may also be part of the system 700, and, in certain embodiments, fewer components than those shown in Figure 7 may also be used in a data processing system 700.

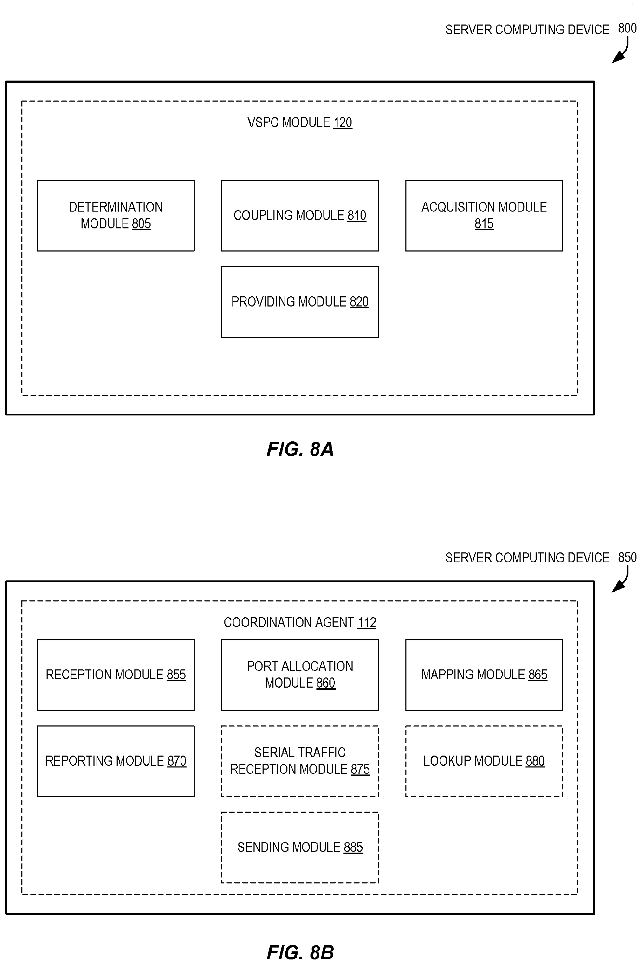

Figures 8A and 8B provide logical views of a server computing device (800, 850) and the modules included in each according to some embodiments. It is not strictly necessary that each module be implemented as physically separate units. Some or all modules may be combined in a physical unit. Also, the modules need not be implemented strictly in hardware. It is envisioned that the units may be implemented through a combination of hardware and software. For example, one or both of the server computing device 800 and server computing device 850 may include one or more central processing units executing program instructions stored in a non-transitory storage medium or in firmware to perform the functions of the modules.

Figure 8A illustrates an example functional block diagram of a server computing device 800 implementing a VSPC module 120 in accordance with some embodiments. The server computing device 800 can include a determination module 805, a coupling module 810, an acquisition module 815, and a providing module 820.

The determination module 805 can be adapted for determining an IP address 124 of a VSPC module 120 deployed with the one or more VMs 116 of a cloud application 114 and that is specific to the cloud application 114. The coupling module 810 can be adapted for causing a serial port interface 118 of each of the one or more VMs 116 to be communicatively coupled with the VSPC module 120. The acquisition module 815 can be adapted for acquiring, from the VSPC module 120, one or more port numbers 126 of the VSPC module 120 that are associated with the one or more VMs 116, wherein each of the one or more port numbers 126 can be used to remotely access the serial port interface 118A of the corresponding VM 116A through the VSPC module 120. The providing module 820 can be adapted for causing the one or more port numbers and the IP address of the VSPC module 120 to be provided to a client to thereby enable the client to remotely access the one or more serial port interfaces 118.

Figure 8B illustrates an example functional block diagram of a server computing device 850 implementing a coordination agent 112 in accordance with some embodiments. The server computing device 850 can include a reception module 855, port allocation module 860, mapping module 865, and reporting module 870. However, in some embodiments, the server computing device 850 can include a serial traffic reception module 875, lookup module 880, and/or sending module 885 in addition to (or alternatively to) modules 855-870.

The reception module 855 can be adapted for receiving one or more packets from a VM 116A of the one or more VMs 116 to create a connection for serial port traffic to be transmitted. The port allocation module 860 can be adapted for allocating, in response to said receiving of the one or more packets, a local port to be associated with the virtual machine. The mapping module 865 can be adapted for associating, in a data structure 122, an identifier of the VM 116A with an identifier of the allocated local port. The reporting module 870 can be adapted for sending the identifier of the allocated local port to a coordination agent 112 to be provided to a client.

In embodiments including the serial traffic reception module 875, it can be adapted for receiving, from a remote (client) computing device 104 of the client at the local port, one or more packets 160 carrying data to be passed to the serial port interface 118A of the VM 116A. In embodiments including the lookup module 880, it can be adapted for identifying the VM 116A as a destination for the one or more packets 160 based upon using the identifier of the allocated local port to perform a lookup in the data structure 122. In embodiments including the sending module 885, it can be adapted for sending the one or more packets to the VM 116A.

Some portions of the preceding detailed descriptions have been presented in terms of algorithms and symbolic representations of transactions on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of transactions leading to a desired result. The transactions are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" and the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present invention are not described with reference to any particular programming language. It will be appreciated that a variety of programming languages may be used to implement the teachings of embodiments of the invention as described herein.

In the foregoing specification, embodiments of the invention have been described with reference to specific exemplary embodiments thereof. It will be evident that various modifications may be made thereto without departing from the scope of the invention as set forth in the following claims. The specification and drawings are, accordingly, to be regarded in an illustrative sense rather than a restrictive sense.

Throughout the description, embodiments of the present invention have been presented through flow diagrams. It will be appreciated that the order of transactions and transactions described in these flow diagrams are only intended for illustrative purposes and not intended as a limitation of the present invention. For example, although the flow diagrams illustrated in the figures show a particular order of operations performed by certain embodiments, it should be understood that such order is exemplary (e.g., alternative embodiments may perform the operations in a different order, combine certain operations, overlap certain operations, etc.). Accordingly, one having ordinary skill in the art would recognize that variations can be made to the flow diagrams without departing from the scope of the invention as set forth in the following claims. Various modifications and equivalents are within the scope of the following claims.

## Claims

1. A server computing device (106) configured to execute a coordination agent to automatically provide remote access to one or more serial port interfaces (118) of one or more virtual machines (116) of a cloud application (114), the server computing device (106) comprising:
a determination module (805) for determining an Internet Protocol, IP, address (124) of a Virtual Serial Port Concentrator, VSPC, module (120) deployed with the one or more virtual machines (116) within the cloud application (114) and that is specific to the cloud application (114);
a coupling module (810) for causing a serial port interface (118) of each of the one or more virtual machines (116) to be communicatively coupled with the VSPC module (120);
an acquisition module (815) for acquiring, from the VSPC module (120), one or more port numbers (126) of the VSPC module (120) that are associated with the one or more virtual machines (116), wherein each of the one or more port numbers (126) can be used to remotely access the serial port interface (118A) of the corresponding virtual machine (116A) through the VSPC module (120); and
a providing module (820) for causing the one or more port numbers and the IP address of the VSPC module (120) to be provided to a client by transmission of an email message (400) via a mail server to thereby enable the client to remotely access the one or more serial port interfaces (118).

2. A server computing device (106) configured to execute a Virtual Serial Port Concentrator, VSPC, module (120) within a cloud application to automatically provide remote access to one or more serial port interfaces (118) of one or more virtual machines (116) of the cloud application (114), wherein the VSPC module is included in cloud virtual application templates and deployed along with the one or more virtual machines (116) of the cloud application, the server computing device (106) comprising:
a receiving module (855) for receiving one or more packets from a virtual machine (116A) of the one or more virtual machines (116) to create a connection for serial port traffic to be transmitted;
a port allocation module (860) for, in response to said receiving the one or more packets by the receiving module (855), allocating a local port to be associated with the virtual machine;
a mapping module (865) for associating an identifier of the virtual machine (116A) with an identifier of the allocated local port in a data structure (122); and
a reporting module (870) for sending at least the identifier of the allocated local port to a coordination agent (112) to be provided to a client.

3. The server computing device (106) of claim 2, further comprising:
a reception module (875) for receiving, from a remote computing device (104) of the client at the allocated local port, one or more packets (160) carrying data to be passed to the serial port interface (118A) of the virtual machine (116A);
a lookup module (880) for identifying the virtual machine (116A) as a destination for the one or more packets (160) based upon using the identifier of the allocated local port at which the one or more packets (160) were received to perform a lookup in the data structure (122); and
a sending module (885) for sending the one or more packets to the virtual machine (116A).

4. A system that automatically provides remote access to one or more serial port interfaces (118) of one or more virtual machines (116) of a cloud application (114), comprising:
a coordination agent (112) executed by one or more server computer devices (106) according to claim 1; and
a Virtual Serial Port Concentrator, VSPC, module (120) according to any of claims 2 through 3 .

5. The system of claim 4, further comprising a cloud management module (108) that:
receives a request from a client computing device (104) to deploy the cloud application (114); and
in response to said request, causes the one or more virtual machines (116) and the VSPC module (120) to be deployed,
wherein the cloud management module (108) further:
transmits, to the coordination agent (112), an indication that the cloud application (114) is in a running state; and
transmits, to the coordination agent (112), the IP address (124) of the VSPC module (120).

6. The system of claim 4 or 5, wherein code for the one or more virtual machines (116) and the VSPC module (120) is saved as a single virtual appliance template,
wherein the VSPC module (120) is dedicated to the cloud application (114) and does not serve any other cloud applications,
wherein the VSPC module (120) comprises a daemon process,
wherein the IP address (124) of the VSPC module (120) determined by the coordination agent (112) is an externally-accessible IP address, wherein the VSPC module (120) also has an internal IP address.

7. A method in a coordination agent (112) executed by a server computing device (106) for automatically providing remote access to one or more serial port interfaces (118) of one or more virtual machines (116) of a cloud application (114), the method comprising:
determining, by the coordination agent (112), an Internet Protocol, IP, address (124) of a Virtual Serial Port Concentrator, VSPC, module (120) deployed with the one or more virtual machines (116) within the cloud application (114) and that is specific to the cloud application (114);
causing, by the coordination agent (112), a serial port interface (118) of each of the one or more virtual machines (116) to be communicatively coupled with the VSPC module (120);
acquiring, by the coordination agent (112) from the VSPC module (120), one or more port numbers (126) of the VSPC module (120) that are associated with the one or more virtual machines (116), wherein each of the one or more port numbers (126) can be used to remotely access the serial port interface (118A) of the corresponding virtual machine (116A) through the VSPC module (120); and
causing, by the coordination agent (112), the one or more port numbers and the IP address of the VSPC module (120) to be provided to a client to thereby enable the client to remotely access the one or more serial port interfaces (118), by transmitting an email message (400) that includes the one or more port numbers and the IP address (124) of the VSPC module (120) to the client via a mail server.

8. The method according to claim 7, further comprising:
prior to the determining the IP address, detecting, by the coordination agent (112), that the cloud application (114) has reached a running state, wherein the running state indicates that the one or more virtual machines (116) have been successfully deployed.

9. The method according to claim 7 or 8, wherein said determining the IP address of the VSPC module (120) includes receiving, from a cloud management module (108), the IP address,
wherein said causing the serial port interface (118) of each of the one or more virtual machines (116) to be communicatively coupled with the VSPC module (120) comprises transmitting, to the cloud management module (108), a request identifying the IP address (124) to cause the cloud management module (108) to configure each of the one or more virtual machines (116),
wherein said causing the one or more port numbers and the IP address (124) of the VSPC module (120) to be provided to a client comprises:
receiving, from the cloud management module (108), an email address of the client.

10. The method according to any one of claims 7-9, wherein said coordination agent (112) comprises a daemon process.

11. A method in a Virtual Serial Port Concentrator, VSPC, module (120) executed within a cloud application by a server computing device (106) for automatically providing remote access to one or more serial port interfaces (118) of one or more virtual machines (116) of the cloud application (114), wherein the VSPC module is included in cloud virtual application templates and deployed along with the one or more virtual machines (116) of the cloud application, the method comprising:
receiving, at the VSPC module (120), one or more packets from a virtual machine (116A) of the one or more virtual machines (116) to create a connection for serial port traffic to be transmitted;
in response to said receiving of the one or more packets, allocating, by the VSPC module (120), a local port to be associated with the virtual machine;
associating, by the VSPC module (120) in a data structure (122), an identifier of the virtual machine (116A) with an identifier of the allocated local port; and
sending, by the VSPC module (120), the identifier of the allocated local port to a coordination agent (112) to be provided to a client.

12. The method according to claim 11, further comprising:
receiving, by the VSPC module (120) from a remote computing device (104) of the client at the local port, one or more packets (160) carrying data to be passed to the serial port interface (118A) of the virtual machine (116A);
identifying, by the VSPC module (120), the virtual machine (116A) as a destination for the one or more packets (160) based upon using the identifier of the allocated local port to perform a lookup in the data structure (122); and
sending, by the VSPC module (120), the one or more packets to the virtual machine (116A).

13. The method according to claim 11 or 12, wherein said VSPC module (120) comprises another virtual machine that was deployed together with the one or more virtual machines (116),
wherein said server computer device (106) that executes the VSPC module (120) also executes the one or more virtual machines (116).

14. A non-transitory computer-readable storage medium (710) storing instructions which, when executed by a processor (705) of a server computing device (106), cause the server computing device (106) to automatically providing remote access to one or more serial port interfaces (118) of one or more virtual machines (116) of a cloud application (114) by performing the method of any one of claims 7-13.

15. An apparatus, comprising:
one or more processors (705); and
the non-transitory computer-readable storage medium (710) of claim 14.

## Patentansprüche

1. Server-Computervorrichtung (106), die dafür konfiguriert ist, einen Koordinationsagenten auszuführen, um automatisch Fernzugriff auf eine oder mehrere serielle Schnittstellen (118) einer oder mehrerer virtueller Maschinen (116) einer Cloud-Anwendung (114) bereitzustellen, wobei die Server-Computervorrichtung (106) Folgendes umfasst:
ein Bestimmungsmodul (805) zum Bestimmen einer Internetprotokoll-, IP, Adresse (124) eines virtuellen seriellen Konzentrator- (Virtual Serial Port Concentrator, VSPC) Moduls (120), das mit der einen oder den mehreren virtuellen Maschinen (116) in der Cloud-Anwendung (114) bereitgestellt wird, und das spezifisch für die Cloud-Anwendung (114) ist;
ein Kopplungsmodul (810), das bewirkt, dass eine serielle Schnittstelle (118) jeder der einen oder mehreren virtuellen Maschinen (116) kommunikativ mit dem VSPC-Modul (120) gekoppelt wird;
ein Erfassungsmodul (815), das von dem VSPC-Modul (120) eine oder mehrere Portnummern (126) des VSPC-Moduls (120) erfasst, die der einen oder den mehreren virtuellen Maschinen (116) zugeordnet sind, wobei jede der einen oder mehreren Portnummern (126) verwendet werden kann, um über das VSPC-Modul (120) entfernt auf die serielle Schnittstelle (118A) der entsprechenden virtuellen Maschine (116A) zuzugreifen; und
ein Bereitstellungsmodul (820), das bewirkt, dass die eine oder mehreren Portnummern und die IP-Adresse des VSPC-Moduls (120) einem Client durch Übertragen einer E-Mail-Nachricht (400) über einen Mailserver bereitgestellt werden, damit der Client entfernt auf eine oder mehrere serielle Schnittstellen zugreifen kann (118).

2. Server-Computervorrichtung (106), die dafür konfiguriert ist, ein virtuelles serielles Konzentrator-, VSPC, Modul (120) in einer Cloud-Anwendung auszuführen, um einen Fernzugriff auf eine oder mehrere serielle Schnittstellen (118) einer oder mehrerer virtueller Maschinen (116) einer Cloud-Anwendung (114) automatisch bereitzustellen, wobei das VSPC-Modul in Vorlagen für virtuelle Cloud-Anwendungen enthalten ist und zusammen mit einer oder mehreren virtuellen Maschinen (116) der Cloud-Anwendung bereitgestellt wird, wobei die Server-Computervorrichtung (106) Folgendes umfasst:
ein Empfangsmodul (855) zum Empfangen eines oder mehrerer Pakete von einer virtuellen Maschine (116A) der einen oder mehreren virtuellen Maschinen (116), um eine Verbindung für den zu übertragenden seriellen Datenverkehr herzustellen;
ein Portzuweisungsmodul (860) zum Antworten auf das Empfangen des einen oder der mehreren Pakete durch das Empfangsmodul (855) zum Zuweisen eines lokalen Ports, der der virtuellen Maschine zugeordnet werden soll;
ein Zuordnungsmodul (865) zum Zuordnen einer Kennung der virtuellen Maschine (116A) zu einer Kennung des zugewiesenen lokalen Ports in einer Datenstruktur (122); und
ein Berichtmodul (870) zum Senden mindestens der Kennung des zugewiesenen lokalen Ports an einen Koordinationsagenten (112), der einem Client bereitgestellt werden soll.

3. Server-Computervorrichtung (106) nach Anspruch 2, die ferner Folgendes umfasst:
ein Empfangsmodul (875) zum Empfangen, von einer entfernten Computervorrichtung (104) des Clients an dem zugewiesenen lokalen Port, eines oder mehrerer Pakete (160), die Daten enthalten, die an die serielle Schnittstelle (118A) der virtuellen Maschine (116A) übertragen werden sollen;
ein Suchmodul (880) zum Identifizieren der virtuellen Maschine (116A) als Ziel für das eine oder die mehreren Pakete (160) basierend auf der Verwendung der Kennung des zugewiesenen lokalen Ports, an dem das eine oder die mehreren Pakete (160) empfangen wurden, um eine Suche in der Datenstruktur (122) durchzuführen; und
ein Sendemodul (885) zum Senden des einen oder der mehreren Pakete an die virtuelle Maschine (116A).

4. System, das automatisch Fernzugriff auf eine oder mehrere serielle Schnittstellen (118) einer oder mehrerer virtueller Maschinen (116) einer Cloud-Anwendung (114) bereitstellt, wobei das System Folgendes umfasst:
einen Koordinationsagenten (112), der von einem oder mehreren Servercomputern (106) nach Anspruch 1 ausgeführt wird; und
ein virtuelles serielles Konzentrator-, VSPC, Modul (120) nach einem der Ansprüche 2 bis 3.

5. System nach Anspruch 4, das ferner ein Cloud-Management-Modul (108) umfasst, das:
eine Anforderung von einer Client-Computervorrichtung (104) empfängt, um die Cloud-Anwendung (114) bereitzustellen; und
als Antwort auf die Anforderung bewirkt, dass die eine oder mehreren virtuellen Maschinen (116) und das VSPC-Modul (120) bereitgestellt werden,
wobei das Cloud-Management-Modul (108) ferner:
an den Koordinationsagenten (112) einen Hinweis sendet, dass sich die Cloud-Anwendung (114) in einem Betriebszustand befindet; und
die IP-Adresse (124) des VSPC-Moduls (120) an den Koordinationsagenten (112) überträgt.

6. System nach Anspruch 4 oder 5, wobei Code für die eine oder die mehreren virtuellen Maschinen (116) und das VSPC-Modul (120) als einzelne Vorlage für virtuelle Geräte gespeichert wird,
wobei das VSPC-Modul (120) der Cloud-Anwendung (114) gewidmet ist und keine anderen Cloud-Anwendungen bedient,
wobei das VSPC-Modul (120) einen Hintergrundprozess umfasst,
wobei die vom Koordinationsagenten (112) bestimmte IP-Adresse (124) des VSPC-Moduls (120) eine von außen zugängliche IP-Adresse ist, wobei das VSPC-Modul (120) darüber hinaus eine interne IP-Adresse hat.

7. Verfahren in einem Koordinationsagenten (112), das von einem Server-Computervorrichtung (106) zum automatischen Bereitstellen eines Fernzugriffs auf eine oder mehrere serielle Schnittstellen (118) einer oder mehrerer virtueller Maschinen (116) einer Cloud-Anwendung (114) ausgeführt wird, wobei das Verfahren Folgendes umfasst:
Bestimmen, durch den Koordinationsagenten (112), einer Internetprotokoll-, IP, Adresse (124) eines virtuellen seriellen Konzentrator-, VSPC, Moduls (120), das mit der einen oder den mehreren virtuellen Maschinen (116) in der Cloud-Anwendung (114) bereitgestellt wird, und das für die Cloud-Anwendung (114) spezifisch ist;
Bewirken, durch den Koordinationsagenten (112), dass eine serielle Schnittstelle (118) jeder der einen oder mehreren virtuellen Maschinen (116) kommunikativ mit dem VSPC-Modul (120) gekoppelt wird;
Erfassen, durch den Koordinationsagenten (112), von dem VSPC-Modul (120) einer oder mehrerer Portnummern (126) des VSPC-Moduls (120), die der einen oder den mehreren virtuellen Maschinen (116) zugeordnet sind, wobei jede der einen oder mehreren Portnummern (126) verwendet werden kann, um über das VSPC-Modul (120) entfernt auf die serielle Schnittstelle (118A) der entsprechenden virtuellen Maschine (116A) zuzugreifen; und
Bewirken, dass durch den Koordinationsagenten (112) die eine oder mehreren Portnummern und die IP-Adresse des VSPC-Moduls (120) einem Client bereitgestellt werden, um dadurch dem Client den Fernzugriff auf die eine oder mehrere serielle Schnittstellen (118) zu ermöglichen, indem über einen Mailserver eine E-Mail-Nachricht (400) an den Client gesendet wird, die die eine oder mehreren Portnummern und die IP-Adresse (124) des VSPC-Moduls (120) enthält.

8. Verfahren nach Anspruch 7, das ferner Folgendes umfasst:
vor dem Bestimmen der IP-Adresse, Bestimmen, durch den Koordinationsagenten (112), dass die Cloud-Anwendung (114) einen Betriebszustand erreicht hat, wobei der Betriebszustand anzeigt, dass die eine oder mehreren virtuellen Maschinen (116) erfolgreich bereitgestellt wurden.

9. Verfahren nach Anspruch 7 oder 8, wobei das Bestimmen der IP-Adresse des VSPC-Moduls (120) das Empfangen der IP-Adresse von einem Cloud-Verwaltungsmodul (108) umfasst,
wobei das Verursachen, dass die serielle Schnittstelle (118) jeder der einen oder mehreren virtuellen Maschinen (116) kommunikativ mit dem VSPC-Modul (120) gekoppelt wird, das Senden einer Anforderung an das Cloud-Verwaltungsmodul (108) umfasst, das die IP-Adresse (124) identifiziert, um zu bewirken, dass das Cloud-Verwaltungsmodul (108) jede der einen oder mehreren virtuellen Maschinen (116) konfiguriert,
wobei das Verursachen, dass die eine oder mehreren Portnummern und die IP-Adresse (124) des VSPC-Moduls (120) einem Client bereitgestellt werden, Folgendes umfasst:
Empfangen einer E-Mail-Adresse des Clients von dem Cloud-Verwaltungsmodul (108).

10. Verfahren nach einem der Ansprüche 7 bis 9, wobei der Koordinationsagent (112) einen Hintergrundprozess umfasst.

11. Verfahren in einem virtuellen seriellen Konzentrator-, VSPC, Modul (120), das in einer Cloud-Anwendung von einer Server-Computervorrichtung (106) zum automatischen Bereitstellen eines Fernzugriffs auf eine oder mehrere serielle Schnittstellen (118) einer oder mehrerer virtueller Maschinen (116) der Cloud-Anwendung (114) ausgeführt wird, wobei das VSPC-Modul in Vorlagen für virtuelle Cloud-Anwendungen enthalten ist und zusammen mit einer oder mehreren virtuellen Maschinen (116) der Cloud-Anwendung bereitgestellt wird, wobei das Verfahren Folgendes umfasst:
Empfangen, an dem VSPC-Modul (120), eines oder mehrerer Pakete von einer virtuellen Maschine (116A) der einen oder mehreren virtuellen Maschinen (116), um eine Verbindung für den zu übertragenden seriellen Datenverkehr herzustellen;
als Reaktion auf das Empfangen des einen oder der mehreren Pakete, Zuweisen, durch das VSPC-Modul (120), eines lokalen Ports, der der virtuellen Maschine zugeordnet werden soll;
Zuordnen, durch das VSPC-Modul (120) in einer Datenstruktur (122), einer Kennung der virtuellen Maschine (116A) zu einer Kennung des zugewiesenen lokalen Ports; und
Senden, durch das VSPC-Modul (120), der Kennung des zugewiesenen lokalen Ports an einen Koordinationsagenten (112), der einem Client bereitgestellt werden soll.

12. Verfahren nach Anspruch 11, das ferner Folgendes umfasst:
Empfangen, durch das VSPC-Modul (120) von einer entfernten Computervorrichtung (104) des Clients an dem lokalen Port, eines oder mehrerer Pakete (160), die Daten enthalten, die an die serielle Schnittstelle (118A) der virtuellen Maschine (116A) übertragen werden sollen;
Identifizieren, durch das VSPC-Modul (120), der virtuellen Maschine (116A) als Ziel für das eine oder die mehreren Pakete (160) basierend auf der Verwendung der Kennung des zugewiesenen lokalen Ports, um eine Suche in der Datenstruktur (122) durchzuführen; und
Senden, durch das VSPC-Modul (120), des einen oder der mehreren Pakete an die virtuelle Maschine (116A).

13. Verfahren nach Anspruch 11 oder 12, wobei das VSPC-Modul (120) eine andere virtuelle Maschine umfasst, die zusammen mit der einen oder den mehreren virtuellen Maschinen (116) bereitgestellt wurde,
wobei die Server-Computervorrichtung (106), die das VSPC-Modul (120) ausführt, auch die eine oder mehreren virtuellen Maschinen (116) ausführt.

14. Nicht-flüchtiges computerlesbares Speichermedium (710), das Anweisungen speichert, die, wenn sie von einem Prozessor (705) einer Server-Computervorrichtung (106) ausgeführt werden, die Server-Computervorrichtung (106) veranlassen, automatisch einen Fernzugriff auf eine oder mehrere serielle Schnittstellen (118) einer oder mehrerer virtueller Maschinen (116) einer Cloud-Anwendung (114) durch Ausführen des Verfahrens nach einem der Ansprüche 7 bis 13 bereitzustellen.

15. Vorrichtung, die Folgendes umfasst:
einen oder mehrere Prozessoren (705); und
das nicht-flüchtige computerlesbare Speichermedium (710) nach Anspruch 14.

## Revendications

1. Dispositif informatique serveur (106) configuré pour exécuter un agent de coordination pour fournir automatiquement un accès à distance à une ou plusieurs interfaces de port série (118) d'une ou plusieurs machines virtuelles (116) d'une application cloud (114), le dispositif informatique serveur (106) comprenant :
un module de détermination (805) pour déterminer une adresse de protocole Internet, IP, (124) d'un module de concentrateur de port série virtuel, VSPC, (120) déployé avec l'une ou plusieurs machines virtuelles (116) dans l'application cloud (114) et qui est spécifique à l'application cloud (114) ;
un module de couplage (810) pour amener une interface de port série (118) de chacune des une ou plusieurs machines virtuelles (116) à être couplée en communication avec le module VSPC (120) ;
un module d'acquisition (815) pour acquérir, à partir du module VSPC (120), un ou plusieurs numéros de port (126) du module VSPC (120) qui sont associés à l'une ou plusieurs machines virtuelles (116), dans lequel chacun des un ou plusieurs numéros de port (126) peuvent être utilisés pour accéder à distance à l'interface de port série (118A) de la machine virtuelle correspondante (116A) via le module VSPC (120) ; et
un module de fourniture (820) pour amener l'un ou plusieurs numéros de port et l'adresse IP du module VSPC (120) à être fournis à un client par transmission d'un message électronique (400) via un serveur de messagerie pour permettre ainsi au client d'accéder à distance à une ou plusieurs interfaces de port série (118) .

2. Dispositif informatique serveur (106) configuré pour exécuter un module (120) de concentrateur de port série virtuel, VSPC, dans une application cloud pour fournir automatiquement un accès à distance à une ou plusieurs interfaces de port série (118) d'une ou plusieurs machines virtuelles (116) de l'application cloud (114), dans lequel le module VSPC est inclus dans des modèles d'application virtuelle cloud et déployé avec l'une ou plusieurs machines virtuelles (116) de l'application cloud, le dispositif informatique serveur (106) comprenant :
un module de réception (855) pour recevoir un ou plusieurs paquets à partir d'une machine virtuelle (116A) de l'une ou plusieurs machines virtuelles (116) pour créer une connexion pour le trafic de port série à transmettre ;
un module d'allocation de port (860) pour, en réponse à ladite réception de l'un ou plusieurs paquets par le module de réception (855), allouer un port local à associer à la machine virtuelle ;
un module de mappage (865) pour associer un identifiant de la machine virtuelle (116A) à un identifiant du port local alloué dans une structure de données (122) ; et
un module de rapport (870) pour envoyer au moins l'identifiant du port local alloué à un agent de coordination (112) à fournir à un client.

3. Dispositif informatique serveur (106) selon la revendication 2, comprenant en outre :
un module de réception (875) pour recevoir, à partir d'un dispositif informatique distant (104) du client au niveau du port local alloué, un ou plusieurs paquets (160) transportant des données à transmettre à l'interface de port série (118A) de la machine virtuelle (116A) ;
un module de recherche (880) pour identifier la machine virtuelle (116A) en tant que destination pour l'un ou plusieurs paquets (160) sur la base de l'utilisation de l'identifiant du port local alloué sur lequel l'un ou plusieurs paquets (160) ont été reçus pour effectuer une recherche dans la structure de données (122) ; et
un module d'envoi (885) pour envoyer l'un ou plusieurs paquets à la machine virtuelle (116A).

4. Système qui fournit automatiquement un accès à distance à une ou plusieurs interfaces de port série (118) d'une ou plusieurs machines virtuelles (116) d'une application cloud (114), comprenant :
un agent de coordination (112) exécuté par un ou plusieurs dispositifs informatiques serveurs (106) selon la revendication 1 ; et
un module de concentrateur de port série virtuel, VSPC, (120) selon l'une quelconque des revendications 2 à 3.

5. Système selon la revendication 4, comprenant en outre un module de gestion de cloud (108) qui :
reçoit une demande à partir d'un dispositif informatique client (104) pour déployer l'application cloud (114) ; et
en réponse à ladite demande, provoque le déploiement de l'une ou plusieurs machines virtuelles (116) et du module VSPC (120),
dans lequel le module de gestion de cloud (108) en outre :
transmet, à l'agent de coordination (112), une indication que l'application cloud (114) est dans un état en cours d'exécution ; et
transmet, à l'agent de coordination (112), l'adresse IP (124) du module VSPC (120).

6. Système selon la revendication 4 ou 5, dans lequel le code pour l'une ou plusieurs machines virtuelles (116) et le module VSPC (120) est enregistré en tant que modèle d'appareil virtuel unique,
dans lequel le module VSPC (120) est dédié à l'application cloud (114) et ne dessert aucune autre application cloud,
dans lequel le module VSPC (120) comprend un processus démon,
dans lequel l'adresse IP (124) du module VSPC (120) déterminée par l'agent de coordination (112) est une adresse IP accessible de l'extérieur, dans lequel le module VSPC (120) a également une adresse IP interne.

7. Procédé dans un agent de coordination (112) exécuté par un dispositif informatique serveur (106) pour fournir automatiquement un accès à distance à une ou plusieurs interfaces de port série (118) d'une ou plusieurs machines virtuelles (116) d'une application cloud (114), le procédé comprenant :
la détermination, par l'agent de coordination (112), d'une adresse protocole Internet, IP, (124) d'un module de concentrateur de port série virtuel, VSPC, (120) déployé avec l'une ou plusieurs machines virtuelles (116) dans l'application cloud (114) et qui est spécifique à l'application cloud (114) ;
la provocation, par l'agent de coordination (112), d'une interface de port série (118) de chacune des une ou plusieurs machines virtuelles (116) à être couplée en communication avec le module VSPC (120);
l'acquisition, par l'agent de coordination (112) à partir du module VSPC (120), d'un ou plusieurs numéros de port (126) du module VSPC (120) qui sont associés à une ou plusieurs machines virtuelles (116), dans lequel chacun des un ou plusieurs numéros de port (126) peuvent être utilisés pour accéder à distance à l'interface de port série (118A) de la machine virtuelle correspondante (116A) via le module VSPC (120) ; et
la provocation, par l'agent de coordination (112), de l'un ou plusieurs numéros de port et de l'adresse IP du module VSPC (120) à être fournis à un client pour permettre ainsi au client d'accéder à distance à une ou plusieurs interfaces de port série (118), en transmettant un message électronique (400) qui comprend l'un ou plusieurs numéros de port et l'adresse IP (124) du module VSPC (120) au client via un serveur de messagerie.

8. Procédé selon la revendication 7, comprenant en outre : avant la détermination de l'adresse IP, la détection, par l'agent de coordination (112), que l'application cloud (114) a atteint un état de fonctionnement, dans lequel l'état de fonctionnement indique que l'une ou plusieurs machines virtuelles (116) ont été déployées avec succès.

9. Procédé selon la revendication 7 ou 8, dans lequel ladite détermination de l'adresse IP du module VSPC (120) comprend la réception, à partir d'un module de gestion de cloud (108), de l'adresse IP,
dans lequel ledit élément provoquant l'interface de port série (118) de chacune des une ou plusieurs machines virtuelles (116) à être coupler en communication avec le module VSPC (120) comprend la transmission, au module de gestion de cloud (108), d'une requête identifiant l'adresse IP (124) pour amener le module de gestion de cloud (108) à configurer chacune des une ou plusieurs machines virtuelles (116),
dans lequel ladite mise à disposition de l'un ou plusieurs numéros de port et de l'adresse IP (124) du module VSPC (120) à un client comprend :
la réception, à partir du module de gestion cloud (108), d'une adresse e-mail du client.

10. Procédé selon l'une quelconque des revendications 7 à 9, dans lequel ledit agent de coordination (112) comprend un processus démon.

11. Procédé dans un module (120) de concentrateur de port série virtuel, VSPC, exécuté dans une application cloud par un dispositif informatique serveur (106) pour fournir automatiquement un accès à distance à une ou plusieurs interfaces de port série (118) d'une ou plusieurs machines virtuelles (116) de l'application cloud (114), dans lequel le module VSPC est inclus dans des modèles d'application virtuelle cloud et déployé avec l'une ou plusieurs machines virtuelles (116) de l'application cloud, le procédé comprenant:
la réception, au niveau du module VSPC (120), d'un ou plusieurs paquets à partir d'une machine virtuelle (116A) de l'une ou plusieurs machines virtuelles (116) pour créer une connexion pour le trafic du port série à transmettre ;
en réponse à ladite réception de l'un ou plusieurs paquets, l'allocation, par le module VSPC (120), d'un port local à associer à la machine virtuelle ;
l'association, par le module VSPC (120) dans une structure de données (122), d'un identifiant de la machine virtuelle (116A) à un identifiant du port local alloué ; et
l'envoi, par le module VSPC (120), de l'identifiant du port local alloué à un agent de coordination (112) à fournir à un client.

12. Procédé selon la revendication 11, comprenant en outre :
la réception, par le module VSPC (120) d'un dispositif informatique distant (104) du client au niveau du port local, d'un ou plusieurs paquets (160) transportant des données à transmettre à l'interface de port série (118A) de la machine virtuelle (116A) ;
l'identification, par le module VSPC (120), de la machine virtuelle (116A) comme destination pour l'un ou plusieurs paquets (160) sur la base de l'utilisation de l'identifiant du port local alloué pour effectuer une recherche dans la structure de données (122) ; et
l'envoi, par le module VSPC (120), de l'un ou plusieurs paquets à la machine virtuelle (116A).

13. Procédé selon la revendication 11 ou 12, dans lequel ledit module VSPC (120) comprend une autre machine virtuelle qui a été déployée avec l'une ou plusieurs machines virtuelles (116), dans lequel ledit dispositif informatique serveur (106) qui exécute le module VSPC (120) exécute également l'une ou plusieurs machines virtuelles (116).

14. Support de stockage non transitoire lisible par ordinateur (710) stockant des instructions qui, lorsqu'elles sont exécutées par un processeur (705) d'un dispositif informatique serveur (106), amènent le dispositif informatique serveur (106) à fournir automatiquement un accès distant à une ou plusieurs interfaces de port série (118) d'une ou plusieurs machines virtuelles (116) d'une application cloud (114) en exécutant le procédé de l'une quelconque des revendications 7 à 13.

15. Appareil, comprenant :
un ou plusieurs processeurs (705) ; et
le support de stockage non transitoire lisible par ordinateur (710) selon la revendication 14.
